# EUROPÄISCHE PATENTSCHRIFT

(11) **EP 1 658 424 B1**
(45) Veröffentlichungstag und Bekanntmachung des Hinweises auf die Patenterteilung: **27.01.2010**
(21) Anmeldenummer: 04763985.1
(22) Anmeldetag: 11.08.2004
(51) Int. Cl.: F02D 41/02, F02D 41/04, F02D 41/00

(54) **VERFAHREN ZUM BETREIBEN EINER BRENNKRAFTMASCHINE MIT ABGASREINIGUNGSANLAGE**
METHOD FOR OPERATING AN INTERNAL COMBUSTION ENGINE COMPRISING AN EXHAUST GAS PURIFICATION SYSTEM
PROCEDE POUR FAIRE FONCTIONNER UN MOTEUR A COMBUSTION EQUIPE D'UN SYSTEME D'EPURATION DES GAZ D'ECHAPPEMENT

(30) Priorität: 22.08.2003 DE 10338628
(43) Veröffentlichungstag der Anmeldung: 24.05.2006
(73) Patentinhaber: Daimler AG, 70327 Stuttgart (DE)
(72) Erfinder: LENZ, Michael, 70734 Fellbach (DE)
(74) Vertreter: JENSEN & SON
(86) Internationale Anmeldenummer: PCT/EP2004/008979
(87) Internationale Veröffentlichungsnummer: WO 2005/021951

(56) Entgegenhaltungen:
- EP-A- 1 231 397
- DE-A- 4 440 640
- DE-A- 19 902 203
- US-A- 5 522 367
- US-A- 5 662 084
- US-A- 5 740 045
- US-A- 5 889 205
- US-A- 5 995 895

## Beschreibung

Die Erfindung betrifft ein Verfahren zum Betreiben einer Brennkraftmaschine mit Abgasreinigungsanlage, wobei zum Anheben einer Abgastemperatur in einem Niedriglastbetrieb und in einem Schleppbetrieb eine Ansaugluftdrosselung vorgenommen wird.

Aus der deutschen Patentschrift DE 44 15 650 C2 ist ein Verfahren zum Betreiben einer Brennkraftmaschine bekannt, bei dem zum Anheben eines Abgastemperaturniveaus ein Ansaugluftmassenstrom reduziert wird. Die Reduzierung soll in einer Weise erfolgen, dass nach einer Kraftstoffeinspritzung in jedem Betriebspunkt der Brennkraftmaschine ein nahezu stöchiometrisches Gemisch vorliegt. Auf diese Weise wird gewährleistet, dass sich das Abgastemperaturniveau immer auf einem für den momentanen Betriebspunkt maximalen Wert befindet und ein im Abgasstrang der Brennkraftmaschine angeordneter Katalysator schnellstmöglich seine Aktivierungstemperatur erreicht. Der Betrag der Reduzierung des Ansaugluftmassenstroms soll in Abhängigkeit unter anderem des Restsauerstoffgehaltes im Abgas aus einem Kennfeld ermittelt werden. Dadurch soll gewährleistet werden, dass selbst im instationären Betrieb der Brennkraftmaschine das Gemisch nie zu fett werden kann. Wenn die Betriebstemperatur des Katalysators bereits erreicht ist, wird der Ansaugluftmassenstrom nicht mehr so weit reduziert wie bei kalter Brennkraftmaschine, sondern lediglich in solch einem Maße, dass der Katalysator auf seiner optimalen Betriebstemperatur gehalten wird.

Aus der deutschen Offenlegungsschrift DE 197 49 400 A1 ist ein Verfahren zur Verringerung des NOx-Gehaltes im Abgas einer Dieselbrennkraftmaschine bekannt, bei dem zur Vermeidung einer Abkühlung des Abgases im Schubbetrieb ein Wirkungsgrad der Dieselbrennkraftmaschine bewusst verschlechtert wird. Hierzu kann beispielsweise eine Abgasrückführrate zu Lasten der Verbrauchsminimierung reduziert werden.

Aus der Offenlegungsschrift DE 197 31 623 A1 ist ein Verfahren zum Betreiben eines direkt einspritzenden Dieselmotors bekannt, bei dem eine Abgastemperaturerhöhung durch eine Ansaugluftmassendrosselung erreicht werden soll.

Auch aus der deutschen Offenlegungsschrift DE 44 40 833 A1 ist ein Verfahren zum Betreiben eines Dieselmotors bekannt, bei dem die Abgastemperatur durch Verringerung des Luftmassendurchsatzes, beispielsweise mittels eines Abgasturboladers mit variabler Geometrie, einer Ansaugluftdrosselung, einer Ladedruckabregelung oder einer Ansaugluftvorwärmung, erhöht werden kann.

Moderne Verbrennungsmotoren zeichnen sich durch einen immer höher werdenden Wirkungsgrad vor allem im Teillastbereich aus, wobei dies speziell für direkt einspritzende Otto- und Dieselmotoren gilt. Vorteile eines höheren Wirkungsgrades sind ein geringerer Verbrauch, geringere Rohemissionen und somit eine erhöhte Umweltverträglichkeit. Nachteilig wirkt sich der verbesserte Wirkungsgrad auf katalytische Abgasnachbehandlungssysteme aus, da weniger Abgasenergie und damit eine geringere Abgastemperatur zur Aufheizung der Abgasnachbehandlungssysteme zur Verfügung steht. Dies kann dazu führen, dass diese Abgasnachbehandlungssysteme später oder sogar nie in den zur optimalen Schadstoffkonversion nötigen Temperaturbereich gelangen. Dies führt unter Umständen aufgrund der schlechteren Konversionsfähigkeit der Abgasnachbehandlungssysteme in einem insgesamt schlechteren Emissionsverhalten trotz reduzierter Rohemissionswerte.

Zusätzlich verschärft wird diese Problematik beim Einsatz diskontinuierlicher Abgasnachbehandlungssysteme, wie NOx-Speicherkatalysatoren und/oder Dieselpartikelfiltern. Diese Systeme benötigen zur Konversion bzw. Entfernung der eingespeicherten Abgasbestandteile, beispielsweise NOx, SOx, Partikel, in regelmäßigen Abständen gegebenenfalls aktiv erzeugte Regenerationsphasen, die unter anderem mit deutlichen Abgastemperaturanhebungen verbunden sind. Zur Erzeugung dieser erforderlichen Abgastemperaturen kann unter anderem die aktive Einbringung einer der eigentlichen Hauptverbrennung angeschlossenen Nacheinspritzung beitragen. Diese wird vollständig oder zum Teil im Brennraum des Motors umgesetzt, eventuell unverbrannter Kraftstoff kann zusätzlich auf einem optional vorgeschalteten oxidierenden Katalysator verbrannt werden und die zu regenerierenden Systeme aktiv heizen. Dazu ist es aber notwendig, einen solchen oxidierenden Katalysator im zur Umsetzung des eingebrachten Kraftstoffs notwendigen Temperaturfenster zu halten. Darüber hinaus ist zur Energie- und damit Verbrauchsreduzierung eine mögliche hohe Ausgangstemperatur zu Beginn des aktiven Heizvorgangs von Vorteil.

Bei Systemen aus Brennkraftmaschinen und Abgasnachbehandlungssystemen, die die notwendige Regenerationstemperatur überwiegend oder auch nur teilweise innermotorisch erzeugen, ergibt sich das Problem, dass es Motorbetriebszustände gibt, die naturgemäß keine Erhöhung der Abgastemperatur zulassen. Dies trifft insbesondere auf den Schubbetrieb zu, da dieser durch ein negatives Motorausgangsmoment gekennzeichnet ist und somit im Schubbetrieb keine lasterzeugende und damit auch keine temperaturerzeugende Einspritzung von Kraftstoff vorgenommen wird.

Da der Fahrzustand-Schubbetrieb im Kraftfahrzeug einen wesentlichen Anteil an einem Gesamtfahrprofil haben kann, ist es wichtig, die bereits erreichten Abgastemperaturen zumindest solange wie möglich so hoch wie möglich zu halten, und somit das unvermeidliche Abkühlen des Abgases im Schubbetrieb so gering wie möglich zu halten. Eine sehr effektive Möglichkeit, die Abkühlung des Abgases im Schubbetrieb deutlich zu vermindern, ist eine Reduktion der durch den Motor durchgesetzten Frischluftmasse. Die Reduktion kann durch die Ansteuerung von verschiedenen Drosselstellen, die zwischen Ansaugtrakt und Abgastrakt eingebracht werden können, erreicht werden. Auch das Öffnen einer vorhandenen Abgasrückführeinrichtung kann den kühlenden Luftdurchsatz durch den Motor reduzieren. Solche mit einer Ansaugluftdrosselung arbeitende Verfahren sind beispielsweise in dem zuvor angeführten Stand der Technik erwähnt.

Die angeführten Maßnahmen zur Verringerung des Luftmassendurchsatzes durch Drosselungseingriffe auf der Frischluftseite bewirken neben der Erhaltung eines höheren Abgastemperaturniveaus aber auch in nachteiliger Weise ein geändertes Ansprechverhalten des Fahrzeugs. Speziell wird bei einem Lastwunsch des Fahrers nach einer gedrosselten Schubphase das Ansprechverhalten spürbar schlechter.

Alternativ können auf der Abgasseite angebrachte Drosselungseinrichtungen für eine Verringerung des Luftmassendurchsatzes sorgen, solche abgasseitigen Drosselungseinrichtungen sorgen durch den verursachten Gegendruckanstieg aber für ein deutlich spürbares Bremsmoment, vergleichbar der sogenannten Motorbremse bei LKW's.

Eine weitere Alternative zur Verringerung des Luftmassendurchsatzes liegt in der Anwendung eines abgasseitig angebrachten Bypass-Klappensystems, das in Schubbetriebphasen Gas mit einem hohen Frischluftanteil versehene Abgas um die eigentlichen aktiven Abgasnachbehandlungssysteme herumleitet. Solche System sind aber konstruktiv und kostenmäßig aufwendig.

Mit der Erfindung soll ein Verfahren zum Betreiben einer Brennkraftmaschine mit Abgasreinigungsanlage angegeben werden, das in Niedriglast- und Schubbetriebphasen eine Erhöhung der Abgastemperatur erlaubt, ohne das Ansprechverhalten der Brennkraftmaschine spürbar zu verschlechtern.

Erfindungsgemäß ist hierzu ein Verfahren zum Betreiben einer Brennkraftmaschine mit Abgasreinigungsanlage vorgesehen, wobei zum Anheben einer Abgastemperatur in einem Niedriglastbetrieb und einem Schleppbetrieb eine Ansaugluftdrosselung vorgenommen wird, bei dem ein Maß der Ansaugluftdrosselung in Abhängigkeit einer zu erwartenden Lastanforderung in einer Weise bestimmt wird, so dass bei einer zu erwartenden unveränderten oder abnehmenden Lastanforderung eine erhöhte oder maximal mögliche Ansaugluftdrosselung eingestellt wird und bei einer zu erwartenden ansteigenden Lastanforderung keine oder eine verringerte Ansaugluftdrosselung eingestellt wird, wobei die zu erwartende Lastanforderung anhand von Betrieb- und Umgebungsparametern der Brennkraftmaschine abgeschätzt wird.

Durch die Erfindung wird somit ein Verfahren bereitgestellt, mit dem eine Ansaugluftdrosselung in vorausschauender Weise vorgenommen werden kann, da durch den Einsatz geeigneter und gegebenenfalls bereits im Fahrzeug verbauter Informationssysteme die Drosselungsraten an das zu erwartende abgeschätzte Fahrverhalten dynamisch angepasst werden können. Dies ermöglicht temporär deutlich höhere Drosselungsraten und damit eine deutlich verminderte Abkühlung vorhandener Abgastemperaturen ohne nachteilige Effekte auf das Ansprech- bzw. Fahrverhalten. Speziell wird durch die Erfindung das Ansprechverhalten der Brennkraftmaschine nach einer Schubphase mit abgesenkten Luftmassendurchsatz, entsprechend einem sogenannten Drosselbetrieb, deutlich verbessert. Mit der Erfindung sollen somit in Betriebsphasen, die keinen Lastwunsch des Fahrers erwarten lassen, die Drosselungsraten dynamisch angehoben werden, während in Betriebsphasen mit potentiellem Lastwunsch die Drosselungsraten so gering wie möglich gehalten werden. Die Abschätzung der zu erwartenden Lastanforderung, beim Fahrzeug entsprechend einer Abschätzung des zu erwartenden Verhaltens eines Fahrers soll dabei anhand von Sensorinformationen und weiteren Informationen erfolgen, die aktuelle Gegebenheiten wiedergeben, aus denen sich auf gewisse mögliche Folgehandlungen schließen lässt.

In Weiterbildung der Erfindung ist die Brennkraftmaschine für ein Kraftfahrzeug vorgesehen und die zu erwartende Lastanforderung wird in Abhängigkeit einer Bremspedalstellung, eines Bremsdrucks, eines Verlaufs der Bremspedalstellung und/oder eines Bremsdruckverlaufs abgeschätzt.

Auf diese Weise kann eine durchaus verlässliche Aussage über die zu erwartende Lastanforderung getroffen werden, da in einer Schubphase bei getretenem Bremspedal kein Lastwunsch des Fahrers zu erwarten ist. Somit kann aus der Verknüpfung der Informationen "Schubbetrieb" oder "Niedriglastbetrieb" und "Bremspedal getreten" eine Ansaugluftdrosselung erhöht werden. Beispielsweise kann die Ansaugluftdrosselungsrate auch proportional mit dem Weg, um den das Bremspedal nach unten getreten wird, erhöht werden. Vorteilhafterweise wird auch der Verlauf des Bremspedalweges bzw. des Bremsdrucks erfasst und ausgewertet, so dass bereits beim kleinsten Anzeichen einer Verminderung des Bremseingriffes die Ansaugluftdrosslungsrate in spekulativer Weise überproportional zurückgenommen wird, da bei einer Verminderung des Bremseingriffes die Erwartung berechtigt ist, dass ein Fahrer nun wieder Gas geben will. Auf diese Weise kann auch bei einem schnellen Wechsel von Bremse auf Gaspedal die zur Gewährleistung eines guten Ansprechverhaltens erforderliche Anhebung der Frischluftmasse in vorausschauender Weise eingeleitet werden. Um das Ansprechverhalten nach einem verstärkten Drosselungseingriff weiter zu verbessern, kann vorteilhafterweise eine dynamische Luftmassenüberhöhung realisiert werden, die bei Erkennen eines potentiellen Beendens des Bremseingriffes durch den Fahrer die Ansaugluftdrosselungsrate bereits weitestmöglich verringert.

In Weiterbildung der Erfindung ist die Brennkraftmaschine für ein Kraftfahrzeug vorgesehen und die zu erwartende Lastanforderung wird in Abhängigkeit einer Getriebestellung, insbesondere verknüpft mit einer aktuellen Fahrgeschwindigkeit, abgeschätzt.

Beispielsweise ist bei nicht eingelegtem Getriebegang kein Lastwunsch des Fahrers zu erwarten. Dies gilt insbesondere dann, wenn das Fahrzeug steht. In einem solchen Leerlauf- oder Niedrigstlastbetrieb, bei dem lediglich das Schleppmoment des Motors überwunden werden muss, lässt sich dadurch eine maximal mögliche Ansaugluftdrosselungsrate einstellen, um auch im Leerlaufbetrieb die Abgastemperatur möglichst hoch zu halten und eine rasche Aufheizung der Abgasnachbehandlungssysteme bzw. deren lediglich geringe Abkühlung zu erreichen.

In Weiterbildung der Erfindung ist die Brennkraftmaschine für ein Kraftfahrzeug vorgesehen und die zu erwartende Lastanforderung wird in Abhängigkeit einer Abstandsmessung zu einem vorausfahrenden Fahrzeug abgeschätzt.

Beispielsweise können Informationen aus einem radargestützten Abstandmessgerät, einer sogenannten Distronic, verwendet werden. So lässt beispielsweise die rasche Annnäherung an ein vorausfahrendes Fahrzeug die Wahrscheinlichkeit für einen Lastwunsch des Fahrers deutlich sinken.

In Weiterbildung der Erfindung ist die Brennkraftmaschine für ein Kraftfahrzeug vorgesehen und die zu erwartende Lastanforderung wird in Abhängigkeit einer Information über die Position und/oder Lage des Fahrzeugs abgeschätzt.

Hierzu können beispielsweise Informationen eines Navigationssystems, beispielsweise ein satellitengestütztes Global-Positioning-System, genutzt werden. Nähert sich das Fahrzeug beispielsweise gerade einer Kreuzung mit Ampel an, so sinkt die Wahrscheinlichkeit für ein Lastwunsch des Fahrers, speziell dann, wenn gleichzeitig das Bremspedal getreten wird. Darüber hinaus können aber beispielsweise auch Informationen über die aktuelle Neigung des Fahrzeugs genutzt werden. So ist in aller Regel bei Bergabfahrt und Schubbetrieb kein oder nur ein geringer Lastwunsch zu erwarten. In vorausschauender Weise kann hierbei auch eine Geländeinformation genutzt werden, so beispielsweise ob sich das Fahrzeug gerade am Beginn einer Bergabstrecke befindet.

In Weiterbildung der Erfindung ist die Brennkraftmaschine für ein Kraftfahrzeug vorgesehen und die zu erwartende Lastanforderung wird in Abhängigkeit einer Antriebsschlupfinformation abgeschätzt.

Informationen über den Antriebsschlupf, beispielsweise bei Glätte, lassen ebenfalls das Ausbleiben eines Lastwunsches des Fahrers erahnen, speziell wenn die Antriebsschlupfinformationen im Zusammenhang mit weiteren Informationen von einem Außentemperatursensor und einem Regensensor gesehen werden. Hierbei können beispielsweise auch Informationen genutzt werden, die von einem Fahrdynamikregelungssystem bereitgestellt werden. Bewirkt beispielsweise das Fahrdynamikregelungssystem eine Zurücknahme des Antriebsmoments kann davon ausgegangen werden, dass keine Lastanforderungen an die Brennkraftmaschine erfolgt.

Geeignete Betriebs- und Umgebungsparameter zur Abschätzung der zu erwartenden Lastanforderung können von allen Systemen geliefert werden, die in der Lage sind, einen Fahrerwunsch mit einer gewissen Sicherheit vorhersagen zu können. Dies sind beispielsweise Fahrerassistenzsysteme, die Informationen über Geländebeschaffenheit, Verkehrsdichte, Fahrziele und dergleichen bereitstellen können.

Weitere Merkmale und Vorteile der Erfindung ergeben sich aus den Ansprüchen und der nachfolgenden Beschreibung einer bevorzugten Ausführungsform der Erfindung in Zusammenhang mit den Zeichnungen. In den Zeichnungen zeigen:
- Fig. 1: eine schematische Darstellung einer Brennkraftmaschine für ein Kraftfahrzeug, die zur Durchführung des erfindungsgemäßen Verfahrens ausgebildet ist, und
- Fig. 2: ein Diagramm von Abgastemperaturverläufen, die mit dem erfindungsgemäßen Verfahren bzw. einem konventionellen Verfahren erzielt werden.

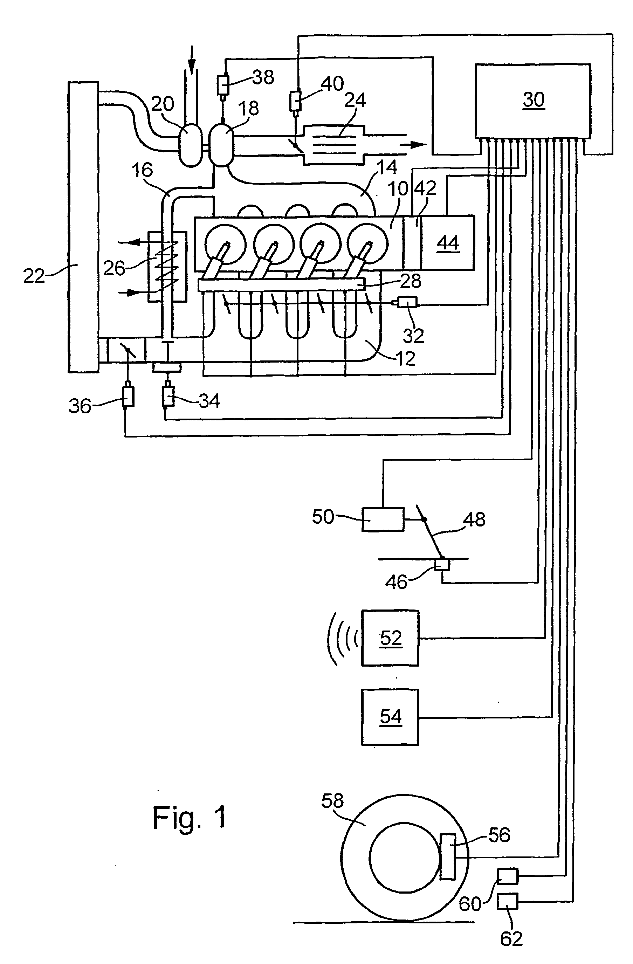

Die schematische Darstellung der Fig. 1 zeigt einen Verbrennungsmotor 10 mit einem Ansaugkrümmer 12, einem Abgaskrümmer 14 sowie einer den Abgaskrümmer 14 und den Ansaugkrümmer 12 verbindenden Abgasrückführleitung 16. Der Abgaskrümmer 14 mündet in eine Abgasturbine 18, die einen Frischluftverdichter 20 antreibt. Die vom Verdichter 20 geförderte Luft gelangt über einen Ladeluftkühler 22 in den Ansaugkrümmer 12. Stromabwärts der Abgasturbine 18 ist eine Abgasreinigungsanlage mit einem Katalysator 24 vorgesehen. In der Abgasrückführleitung 16 ist ein Abgasrückführkühler 26 angeordnet. Kraftstoff wird in die Brennräume des Verbrennungsmotors 10 mittels eines Einspritzsystems 28 eingespritzt, wobei jede der Einspritzdüsen des Einspritzsystems 28 einzeln ansteuerbar ist.

Die Ansteuerung des Einspritzsystems 28 wird mittels eines Motorsteuergeräts 30 vorgenommen. Neben der Einspritzanlage 28 steuert das Motorsteuergerät 30 auch ein Einzeldrosselstellglied 32 an, mittels dem Einzeldrosselklappen in jedem Ansaugkanal des Verbrennungsmotors 10 angesteuert werden können. Das Motorsteuergerät 30 steuert weiterhin ein Abgasrückführstellglied 34 an, mit dem eine Mündung der Abgasrückführleitung 16 in den Ansaugkrümmer 12 geöffnet und verschlossen werden kann. Weiterhin wird mittels des Motorsteuergeräts 30 ein Ansaugluftdrosselstellglied 36 angesteuert, mittels dem eine Drosselklappe im Ansaugkrümmer 12 eingestellt werden kann, die stromaufwärts der Verzweigung des Ansaugkrümmers 12 in die einzelnen Ansaugkanäle und auch stromaufwärts der Mündung der Abgasrückführleitung 16 in den Abgaskrümmer 12 angeordnet ist. Die Abgasturbine 18 weist eine variable Turbinengeometrie auf, die unter Steuerung des Motorsteuergeräts 30 mittels eines Abgasturbinenstellglieds 38 eingestellt werden kann. Ebenfalls unter Steuerung des Motorsteuergeräts 30 wird mittels eines Abgasdrosselstellglieds 40 eine Drosselklappe stromabwärts der Abgasturbine 18 und stromaufwärts des Katalysators 24 eingestellt.

Das Motorsteuergerät 30 erhält Eingangssignale von einem Drehzahl- und Motormomentsensor 42 sowie Informationen von einem Getriebesensor, der feststellt, ob und welcher Getriebegang in einem Getriebe 44 eingelegt ist. Ein Bremspedalsensor 46 liefert dem Motorsteuergerät 30 Informationen über die Stellung eines Bremspedals 48 und ein Bremsdrucksensor 50 liefert Informationen über einen aktuell anliegenden Bremsdruck an das Motorsteuergerät 30. Ein Abstandssensor 52 misst einen Abstand zu einem vorausfahrenden Fahrzeug oder einem in Vorwärtsrichtung liegenden Hindernis und liefert entsprechende Informationen an das Motorsteuergerät 30. Informationen über eine geographische Position sowie eine Lage des Fahrzeugs, entsprechend beispielsweise einem Neigungswinkel zur Horizontalen in Vorwärtsrichtung, erhält das Motorsteuergerät 30 von einem Navigationssystem 54. Ein Antriebsschlupfsensor 56 stellt dem Motorsteuergerät 30 Informationen über einen an einem Antriebsrad 58 auftretenden Schlupf zur Verfügung. Schließlich erhält das Motorsteuergerät 30 Informationen von einem Außentemperatursensor 60 sowie einem Regensensor 62.

Der als Dieselmotor ausgebildete Verbrennungsmotor 10 arbeitet in der Regel in seinem gesamten Betriebsbereich infolge des kraftstoffmassengeführten Gemischbildungsverfahrens mit Sauerstoffüberschuss, entsprechend λ > 1. Begrenzungen für das Luftverhältnis λ gelten für den Volllastbetrieb und in einem Instationärbetrieb bildet die Rauchgrenze eine Begrenzung. Im Teillastbetrieb wird bei modernen Dieselmotoren über eine Abgasrückführung mittels der Abgasrückführleitung 16 der Anteil der Frischluftmasse auf Luftverhältnisse zwischen 1,5 < λ < 5 reduziert. Im Teillastbetrieb wird dadurch die NOₓ-Emission deutlich verringert.

Vor allem in Betriebsbereichen nahe des Schubbetriebs, die auch als "falscher Schub" bezeichnet werden, da das innere Moment kleiner oder gleich dem Schleppmoment plus einem Toleranzfenster ist und die Drehzahl größer als die Leerlaufdrehzahl ist, sowie im Grenzfall des Schubbetriebs, der durch eine Fahrpedalstellung von 0% sowie eine Einspritzmenge von 0, verursacht durch die Schubabschaltung, gekennzeichnet ist, arbeitet der Dieselmotor aufgrund der geringen bzw. nicht vorhandenen Einspritzmenge mit sehr deutlichem Luftüberschuss in Bereichen von 5 < λ < ∞. Diese Betriebsbereiche nahe des Schubbetriebs zeichnet sich dadurch aus, dass an der Motorausgangswelle kein bzw. nur ein sehr geringes Antriebsdrehmoment anliegt, der Motor also im Nulllast- bzw. Niedrigstlastbereich arbeitet. Dabei wird sehr wenig Kraftstoff bei sehr viel Luftüberschuss umgesetzt, wodurch sich sehr niedrige Abgastemperaturen ergeben. Der für die Verbrennung des Kraftstoffs nicht notwendige Luftüberschuss wirkt sich nämlich kühlend auf den gesamten Verbrennungsmotor 10 und damit auch auf das Abgas aus. Insbesondere bei höheren Drehzahlen und damit höherem Luftmassendurchsatz wird in diesen Betriebsbereichen sehr viel kühlende Frischluft durch den Abgaskrümmer 14, die Abgasturbine 18 sowie den Katalysator 24 gefördert. Dies verhindert unter Umständen ein aktives Aufheizen des Katalysators 24 auf höhere Temperaturen bzw. verzögert das Ansprechen der Konversions- oder Speicherfähigkeit des Katalysators 24 oder weiterer Abgasnachbehandlungssysteme.

Zum Erreichen bzw. zum Erhalten der Abgastemperaturen in den zuvor erwähnten Betriebsbereichen, nämlich Niedriglastbereich und Schubbetriebsbereich, ist es hilfreich, die Luftzufuhr durch den Ansaugkrümmer 12 auf das Nötigste und im Bereich der Schubabschaltung idealerweise so weit wie möglich zu reduzieren. Dadurch können höhere Abgastemperaturen erreicht bzw. die vorhandenen Abgastemperaturen länger gehalten werden. Nachteilig bei einer sogenannten Ansaugluftdrosselung ist das veränderte Ansprechverhalten des Fahrzeugs nach einer Schubphase mit reduzierter Luftmasse. Dieses verschlechterte Ansprechverhalten resultiert aus den unvermeidlichen Tot- bzw. Verzögerungszeiten, die benötigt werden, um die für ein dynamisches Motorverhalten erforderliche Luft wieder zur Verfügung zu stellen. Bei konventionellen Verfahren wird daher bei einer Einstellung der Ansaugluftdrosselungsrate ein Kompromiss zwischen einem noch akzeptablen Ansprechverhalten und einer ebenfalls noch akzeptablen Abgastemperaturerzeugung bzw. Abgastemperaturerhaltung eingegangen.

Mit der Erfindung kann hingegen im Niedriglastbereich und im Schubbetriebsbereich des Verbrennungsmotors 10 eine deutlich höhere Ansaugluftdrosselung erzielt werden, ohne dabei das Ansprechverhalten des Verbrennungsmotors 10 bei einem auf eine Drosselungsphase folgenden Lastwunsch spürbar zu verschlechtern. Dies wird dadurch erreicht, dass mittels des Motorsteuergeräts 30 eine zu erwartende Lastanforderung an den Verbrennungsmotor 10 abgeschätzt wird und anhand dieser abgeschätzten Lastanforderung eine Ansaugluftdrosselungsrate eingestellt wird. Dies geschieht in einer Weise, dass bei einer zu erwartenden unveränderten oder abnehmenden Lastanforderung eine erhöhte oder maximal mögliche Ansaugluftdrosselung eingestellt wird und bei einer zu erwartenden ansteigenden Lastanforderung keine oder eine verringerte Ansaugluftdrosselung eingestellt wird.

Die Abschätzung der zu erwartenden Lastanforderung erfolgt innerhalb des Motorsteuergeräts 30 anhand von Betriebs- und Umgebungsparametern des Verbrennungsmotors 10.

Diese Betriebs- und Umgebungsparameter betreffen beispielsweise die Stellung des Bremspedals 48, die mittels des Bremspedalsensors 46 erfasst wird. Darüber hinaus wird ein aktuell anliegender Bremsdruck mittels des Bremsdrucksensors 50 erfasst. Wird beispielsweise während einer Schubbetriebsphase zusätzlich das Bremspedal 48 getreten, so ist während der Zeit, während der das Bremspedal 48 getreten ist, kein Lastwunsch des Fahrers zu erwarten. Infolgedessen erhöht das Motorsteuergerät 30 durch entsprechende Ansteuerung des Ansaugluftdrosselstellglieds 36 eine Ansaugluftdrosselungsrate auf einen maximal möglichen Wert.

Mittels des Bremspedalsensors 46 und des Bremsdrucksensors 50 wird darüber hinaus ein Verlauf der Stellung des Bremspedals 48 sowie ein Bremsdruckverlauf bestimmt und ausgewertet. Ist beispielsweise das Bremspedal 48 noch getreten, werden der Bremsdruck und die Bremspedalstellung aber bereits zurückgenommen, steigt die Wahrscheinlichkeit dafür, dass eine ansteigende Lastanforderung auftreten wird. Infolgedessen wird das Motorsteuergerät 30 die Ansaugdrosselungsrate zurücknehmen oder vollständig auf null setzen. Eine solche dynamische und vorausschauende Luftmassenüberhöhung kann mittels des Motorsteuergeräts 30 beispielsweise auch über eine Ansteuerung des Abgasturbinenstellglieds 38 sowie des Abgasrückführstellglieds 34 erreicht werden.

Erhält das Motorsteuergerät 30 beispielsweise Informationen vom Getriebesensor, dass im Getriebe 44 gerade kein Getriebegang eingelegt ist, kann das Motorsteuergerät 30 annehmen, dass keine ansteigende Lastanforderung zu erwarten ist. Dies gilt noch mehr, wenn dem Motorsteuergerät 30 gleichzeitig die Information übermittelt wird, dass das Fahrzeug gerade steht. Infolgedessen kann bei nicht eingelegtem Getriebegang das Motorsteuergerät 30 die Ansaugluftdrosselungsrate auf einen maximal möglichen Wert einstellen. Beim Einlegen eines Getriebegangs ist dahingegen in Kürze ein Lastwunsch zu erwarten, so dass das Motorsteuergerät 30 infolgedessen die Ansaugluftdrosselung zurückfahren oder auf null setzen wird.

In ähnlicher Weise werden die Signale des Abstandsensors 52 ausgewertet. Wenn mittels des Abstandsensors 53 beispielsweise eine rasche Annäherung an ein vorausfahrendes Fahrzeug festgestellt wird, kann das Motorsteuergerät 30 eine erhöhte Wahrscheinlichkeit für das Ausbleiben eines Lastwunsches annehmen.

Auch Informationen des Navigationssystems 54 werden vom Motorsteuergerät 30 für eine Abschätzung der zu erwartenden Lastanforderung benutzt. So kann beispielsweise bei Annäherung an eine Kreuzung und gleichzeitig sich verminderter Fahrgeschwindigkeit oder getretenem Bremspedal 48 angenommen werden, dass keine ansteigende Lastanforderung folgen wird.

Schließlich kann das Motorsteuergerät 30 dann, wenn der Antriebschlupfsensor 56 einen Antriebsschlupf feststellt und gleichzeitig aufgrund der Informationen vom Außentemperatursensor 60 und vom Regensensor 62 auf Glätte oder Nässe geschlossen werden kann, annehmen, dass keine oder lediglich eine schwach ansteigende Lastanforderung zu erwarten ist und demgemäß eine Ansaugluftdrosselung einstellen.

Die mittels der verschiedenen angeführten Sensoren erfassten Betriebs- und Umgebungsparameter des Verbrennungsmotors 10 können dabei gleichzeitig berücksichtigt werden und beispielsweise unterschiedlich priorisiert werden. Darüber hinaus kann auch die Notwendigkeit einer Ansaugluftdrosselung, entsprechend einer Notwendigkeit höherer Abgastemperaturen, aus Sicht des Abgasnachbehandlungssystems mit dem Katalysator 24 unterschiedlich eingestuft werden. Dies ist unter Umständen notwendig, um Nachteile beim dynamischen Ansprechverhalten des Verbrennungsmotors 10 nachfolgend auf einen Schubbetrieb bzw. Niedriglastbetrieb möglichst unauffällig und für einen Fahrer nicht spürbar zu halten.

Wenn im Niedriglastbetrieb oder im Schubbetrieb eine Ansaugluftdrosselung über das Motorsteuergerät 30 eingestellt ist, wird beispielsweise auch eine stationäre und instationäre Regelung der reduzierten Luftmasse über entsprechende Führungsgrößen, beispielsweise Lambda, Luftmasse, Saugrohrdruck, Abgasgegendruck und/oder physikalische Rauchgrenze, vorgenommen. Das Motorsteuergerät 30 kann darüber hinaus eine Anpassung an veränderte Umwelt- bzw. Betriebsbedingungen vornehmen, beispielsweise an den Atmosphärendruck, die Außenlufttemperatur, eine Veränderung des Abgasgegendrucks, eine Ansauglufttemperatur, eine Abgastemperatur, eine Katalysatortemperatur und/oder eine Motortemperatur.

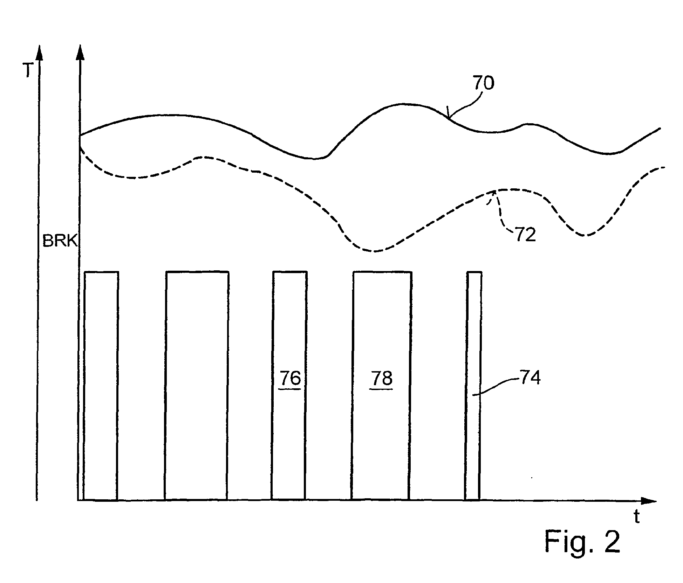

Das Diagramm der Fig. 2 zeigt mit einer durchgezogen dargestellten Linie 70 qualitativ den Verlauf einer Abgastemperatur des Verbrennungsmotors 10, wenn dieser gemäß der Erfindung betrieben wird. Im Vergleich dazu ist mit einer gestrichelt dargestellten Linie 72 der Verlauf der Abgastemperatur bei einem konventionell betriebenen Verbrennungsmotor dargestellt. Die Abgastemperaturen T sind jeweils über der Zeit t aufgetragen. Zusätzlich sind mittels einer Kurve 74 Bremseingriffe BRK eines Fahrers, ebenfalls über der Zeit t, aufgetragen. Dem Diagramm der Fig. 2 kann entnommen werden, dass durch die Erfindung höhere und darüber hinaus auch weniger stark schwankende Abgastemperaturen 70 im realen Fahrbetrieb erreicht werden. Speziell im Schubbetrieb mit zusätzlichen Bremseingriffen 76 und 78 kann durch die Erfindung eine Abkühlung des Abgases, wie sie anhand der Kurve 72 zu erkennen ist, nicht nur verhindert werden, sondern darüber hinaus kann sogar eine Aufheizung des Abgases gemäß der Kurve 70 erzielt werden.

## Patentansprüche

1. Verfahren zum Betreiben einer Diesel-Brennkraftmaschine (10) mit Abgasreinigungsanlage (24), wobei zum Anheben einer Abgastemperatur in einem Niedriglastbetrieb und/oder in einem Schleppbetrieb eine Ansaugluftdrosselung vorgenommen wird,
**dadurch gekennzeichnet, dass**
anhand von Betriebs- und/oder Umgebungsparametern der Brennkraftmaschine (10) eine zu erwartende Lastanforderung an die Brennkraftmaschine (10) abgeschätzt wird und in Abhängigkeit von der abgeschätzten zu erwartenden Lastanforderung die Ansaugluftdrosselung derart eingestellt wird, dass
- bei einer zu erwartenden unveränderten oder abnehmenden Lastanforderung eine erhöhte oder maximal mögliche Ansaugluftdrosselung eingestellt wird und
- bei einer zu erwartenden ansteigenden Lastanforderung keine oder eine verringerte Ansaugluftdrosselung eingestellt wird.

2. Verfahren zum Betreiben einer Brennkraftmaschine nach Anspruch 1,
**dadurch gekennzeichnet, dass**
die Brennkraftmaschine (10) für ein Kraftfahrzeug vorgesehen ist und die zu erwartende Lastanforderung in Abhängigkeit einer Bremspedalstellung, eines Bremsdrucks, eines Verlaufs der Bremspedalstellung und/oder eines Bremsdruckverlaufs abgeschätzt wird.

3. Verfahren zum Betreiben einer Brennkraftmaschine nach einem der vorstehenden Ansprüche,
**dadurch gekennzeichnet, dass**
die Brennkraftmaschine (10) für ein Kraftfahrzeug vorgesehen ist und die zu erwartende Lastanforderung in Abhängigkeit einer Getriebestellung, insbesondere verknüpft mit einer aktuellen Fahrgeschwindigkeit, abgeschätzt wird.

4. Verfahren zum Betreiben einer Brennkraftmaschine nach einem der vorstehenden Ansprüche,
**dadurch gekennzeichnet, dass**
die Brennkraftmaschine (10) für ein Kraftfahrzeug vorgesehen ist und die zu erwartende Lastanforderung in Abhängigkeit einer Abstandsmessung zu einem vorausfahrenden Fahrzeug abgeschätzt wird.

5. Verfahren zum Betreiben einer Brennkraftmaschine nach einem der vorstehenden Ansprüche,
**dadurch gekennzeichnet, dass**
die Brennkraftmaschine (10) für ein Kraftfahrzeug vorgesehen ist und die zu erwartende Lastanforderung in Abhängigkeit einer Information über die Position und/oder Lage des Fahrzeugs abgeschätzt wird.

6. Verfahren zum Betreiben einer Brennkraftmaschine nach einem der vorstehenden Ansprüche,
**dadurch gekennzeichnet, dass**
die Brennkraftmaschine (10) für ein Kraftfahrzeug vorgesehen ist und die zu erwartende Lastanforderung in Abhängigkeit einer Antriebsschlupfinformation abgeschätzt wird.

## Claims

1. Method for operating a diesel internal combustion engine (10) with an exhaust gas purification system (24), therein an intake air restriction is carried out to increase an exhaust gas temperature in a low load mode and/or a drag mode,
**characterised in that**
an expected load demand for the internal combustion engine (10) is estimated on the basis of operating and/or environmental parameters of the internal combustion engine (10), and **in that** the intake air restriction is, in dependence on the estimated expected load demand, adjusted such that
- if the load demand is expected to be unchanged or reduced, an increased or maximum possible intake air restriction is set, and
- if the load demand is expected to increase, no or a reduced intake air restriction is set.

2. Method for operating an internal combustion engine according to claim 1,
**characterized in that**
the internal combustion engine (10) is intended for a motor vehicle and the expected load demand is estimated in dependence on a brake pedal position, a brake pressure, a progression of the brake pedal position and/or a brake pressure progression.

3. Method for operating an internal combustion engine according to any of the preceding claims,
**characterise in that**
the internal combustion engine (10) is intended for a motor vehicle and the expected load demand is estimated in dependence on a gearbox position, in particular linked to a currant travelling seed.

4. Method for operating an internal combustion engine according to any of the preceding claims,
**characterised in that**
the internal combustion engine (10) is intended for a motor vehicle and the expected load demand is estimated in dependence on a measurement of the distance from a preceding vehicle.

5. Method for operating an internal combustion engine according to any of the preceding claims,
**characterised in that**
the internal combustion engine (10) is intended for a motor vehicle and the expected load demand is estimated in dependence on information on the position and/or attitude of the vehicle.

6. Method for operating an internal combustion engine according to any of the preceding claims,
**characterised in that**
the internal combustion engine (10) is intended for a motor vehicle and the expected load demand is estimated in dependence on information on drive slip.

## Revendications

1. Procédé pour faire fonctionner un moteur (10) à combustion interne diesel équipé d'un système d'épuration (24) des gaz d'échappement, ce procédé faisant appel à une diminution de l'air d'aspiration pour augmenter la température des gaz d'échappement en mode à charge réduite et / ou en mode de traction, **caractérisé en ce qu'**au moyeu de paramètres de fonctionnement et / ou d'environnement du moteur (10) à combustion interne, est évaluée une exigence de charge prévue sur le moteur (10) à combustion interne, et en fonction de l'exigence de charge prévue évaluée, la diminution de l'air d'aspiration est réglée de manière telle qu'
- en présence d'une exigence de charge prévue inchangée ou réduite prévue, une diminution de l'air d'aspiration soit accrue ou la plus élevée possible et
- en présence d'une exigence de charge accrue prévue, la diminution de l'air d'aspiration soit nulle ou réduite.

2. Procédé pour faire fonctionner un moteur à combustion interne selon la revendication 1, **caractérisé en ce que** le moteur (10) à combustion interne est prévu pour un véhicule automobile et **en ce que** l'exigence de charge prévue est évaluée en fonction d'une position de la pédale de frein, d'une pression de freinage, d'une allure de la pédale de frein et / ou d'une allure de pression de freinage.

3. Procédé pour faire fonctionner un moteur à combustion interne selon l'une quelconque des revendications précédentes, **caractérisé en ce que** le moteur (10) à combustion interne est prévu pour un véhicule automobile et **en ce que** l'exigence de charge prévue est évaluée en fonction d'lune position de la boîte de vitesses, en particulier combinée à une vitesse actuelle.

4. Procédé pour faire fonctionner un moteur à combustion interne selon l'une quelconque des revendications précédentes, **caractérisé en ce que** le moteur (10) à combustion interne est prévu pour un véhicule automobile et **en ce que** l'exigence de charge prévue est évaluée en fonction d'une mesure de distance par rapport à un véhicule roulant devant ce dernier.

5. Procédé pour faire fonctionner un moteur à combustion interne selon l'une quelconque des revendications précédentes, **caractérisé en ce que** le moteur (10) à combustion interne est prévu pour un véhicule automobile et **en ce que** l'exigence de charge prévue est évaluée en fonction d'une information sur la position et / ou la situation du véhicule.

6. Procédé pour faire fonctionner un moteur à combustion interne selon l'une quelconque des revendications précédentes, **caractérisé en ce que** le moteur (10) à combustion interne est prévu pour un véhicule automobile et **en ce que** l'exigence de charge prévue est évaluée en fonction d'une information sur le platinage à l'accélération.
